# EUROPEAN PATENT SPECIFICATION

(11) **EP 4 396 536 B1**
(45) Date of publication and mention of the grant of the patent: **01.10.2025**
(21) Application number: 22782786.2
(22) Date of filing: 29.08.2022
(51) Int. Cl.: G01D 4/00, G05F 1/10, G05F 1/66, H02J 3/12

(54) **DYNAMIC BELLWETHER METER**
DYNAMISCHES BELLWETHERMESSGERÄT
COMPTEUR INDICATEUR DYNAMIQUE

(30) Priority: 30.08.2021 US 202163238677 P
(43) Date of publication of application: 10.07.2024
(73) Proprietor: Landis+Gyr Technology, Inc., Alpharetta, GA 30022 (US)
(72) Inventor: DUBOIS, Frederic, Winston-Salem, North Carolina 27587 (US); DEDIER, Stephen Todd, Alpharetta, Georgia 30022 (US); ZERPA, Carson, Vero Beach, Florida 32963 (US)
(74) Representative: Marks & Clerk LLP
(86) International application number: PCT/US2022/041867
(87) International publication number: WO 2023/034202

(56) References cited:
- WO-A2-2014/152458
- US-A1- 2021 181 774
- ALIMISIS VARVARA ET AL: "Voltage-VAr optimization (VVO) future trends, challenges and opportunities", 2017 IEEE POWER & ENERGY SOCIETY INNOVATIVE SMART GRID TECHNOLOGIES CONFERENCE (ISGT), IEEE, 23 April 2017 (2017-04-23), pages 1 - 5, XP033241223, DOI: 10.1109/ISGT.2017.8086000
- SENSUS: "Utilizing AMI Infrastructure to Support Distribution Automation Applications", SMART GRID DISTRIBUTION AUTOMATION CONFERENCE, 2 November 2011 (2011-11-02), Raleigh, NC, XP093000693, Retrieved from the Internet <URL:https://pdfs.semanticscholar.org/2cd1/270a94e1d44c069ea13b673f0d56de3e5178.pdf> [retrieved on 20221122]
- BARALIS ELENA ET AL: "Selecting Representatives in a Sensor Network. Web-BI View project Selecting Representatives in a Sensor Network", 16 June 2006 (2006-06-16), XP093000935, Retrieved from the Internet <URL:https://www.researchgate.net/profile/Tania-Cerquitelli/publication/220974130_Selecting_Representatives_in_a_Sensor_Network/links/00b49525d069de9968000000/Selecting-Representatives-in-a-Sensor-Network.pdf> [retrieved on 20221122]

## Description

### TECHNICAL FIELD

This invention relates generally to metering systems and more specifically to electrical metering systems that dynamically assign, from an electrical group of meters, a bellwether meter that is representative of the electrical group.

### BACKGROUND

Resource distribution systems typically use meters to measure and report consumption of a resource. Meters can also be useful for analyzing the resource distribution system for the purposes of ensuring proper functionality and identifying defects. In some cases, a representative meter, or bellwether meter can be identified. Bellwether meters typically represent a small proportion of the total meter population per circuit (e.g., less than 1%).

But existing solutions for selection of bellwether meters suffer from deficiencies. For instance, existing systems are reliant on making decisions based on data obtained from meters which once might have been representative, but are no longer representative due to distribution network changes. For example, existing systems may assign bellwether meters for long time periods such as seasonal or annual time periods. These systems may not be able to react quickly to local changes in resource delivery.

US 2021/181774 A1 describes a voltage control and conservation VCC) system, which includes three subsystems, including an energy delivery (ED) system, an energy control (EC) system and an energy regulation (ER) system. The VCC system is configured to monitor energy usage at the ED system and determine one or more energy delivery parameters at the EC system. The EC system may then provide the one or more energy delivery parameters to the ER system to adjust the energy delivered to a plurality of users for maximum energy conservation.

### SUMMARY

Certain aspects and features include a system and method for identifying a bellwether meter (or metering device). In an example, a method involves receiving, at a first device on a personal area network within a communications network, from each of a set of metering devices on the personal area network and at a first reporting rate, a measurement of the resource distribution network obtained at the respective metering device. The first device and the set of metering devices are within a predefined group of devices. The method further includes analyzing, at the first device, the measurements received from each of the metering devices. The method further includes, based on the analyzing, selecting, at the first device, a first metering device of the set of metering devices as a bellwether metering device for a first period of time. The method further includes receiving, at the first device, from the bellwether metering device, and on the personal area network, measurements at a second reporting rate that is greater than the first reporting rate. The method further includes receiving, at the first device, on the personal area network, and from other devices of the set of metering devices, measurements at the first rate reporting rate.

In an aspect, the selecting includes sending a first signal to the first metering device to instruct the first metering device to transmit the first measurements at the second reporting rate and sending a second signal to at least one of the other devices to instruct the at least one other device to send the second measurements at the first reporting rate.

In an aspect, the first device is a member of an additional predefined group of devices. The additional predefined group of devices includes at least one device that is not a member of the predefined group of devices.

In an aspect, the method further includes reporting, at the first device, the first measurements and the second measurements to a central system.

In an aspect, the first device is a collector or a coordinator for the personal area network.

In an aspect, the method further includes analyzing, at the first device, the first measurements received and the second measurements; and based on analyzing the first measurements and the second measurements, selecting, at the first device and for a second period of time, a second metering device of the plurality of metering devices as the bellwether metering device.

In an aspect, the method further includes receiving, at a central system outside of the personal area network and from one or more of the plurality of metering devices, measurements at a third reporting rate.

In an aspect, a first metering device of the plurality of metering devices is connected to a first resource distribution line and a second metering device of the plurality of metering devices is connected to a second resource distribution line that is connected upstream to the first resource distribution line.

In an aspect, analyzing the measurements includes determining that the first metering device is associated with a measurement value that is either (i) lower than or (ii) higher than the measurement values associated with the other metering devices of the plurality of metering devices.

The exemplary methods discussed above can be implemented on systems including one or more processors or stored as instructions on a non-transitory computer-readable medium.

These illustrative examples are mentioned not to limit or define the disclosure, but to provide examples to aid understanding thereof. Additional examples and further description are provided in the Detailed Description.

### BRIEF DESCRIPTION OF THE FIGURES

These and other features, aspects, and advantages of the present disclosure are better understood when the following Detailed Description is read with reference to the accompanying drawings, where:
Figure 1 depicts an example of a communications network topology of a power distribution system, according to an aspect of the present disclosure.
Figure 2 depicts an example of a distribution topology of a power distribution system, according to an aspect of the present disclosure.
Figure 3 is a flowchart of an exemplary process of identifying a bellwether meter, according to an aspect of the present disclosure
Figure 4 depicts an example of a communications network topology for a portion of a power distribution system in which the meters in the electrical group correspond to a single network, according to an aspect of the present disclosure.
Figure 5 depicts an example of a communications network topology for a portion of a power distribution system in which the meters in the electrical group are joined to two separate networks, according to an aspect of the present disclosure.
Figure 6 illustrates an example of computing device, according to certain aspects of the present disclosure.

### DETAILED DESCRIPTION

Aspects of the present invention relate to bellwether metering devices. A bellwether metering device, or meter, is a meter that is identified as representative of a group of related meters. The measurements obtained from the bellwether meter can be used to inform other processes, such as processes that make adjustments to settings of a resource regulation device or identify an issue in the resource distribution network. Resource regulation devices include Volt-Var control devices, capacitors, and voltage regulators.

Dynamic bellwether metering refers to a determination, on a periodic basis, of the designated bellwether meter from the group of meters, and to the subsequent updating of the determination as appropriate. The group of meters can be an electrical group, which includes meters that are within electrical vicinity of each other or having similar properties. For example, a group may be a region of electric devices connected to an electrical source having similar or the same electrical properties. In other cases, meters in an electrical group may be served by the same transformer or the same lateral feeder.

In a more specific example, each meter within the electrical group reports measurements to a single device, or a coach device, at a default reporting rate, or a first reporting rate. Meters within the electrical group can be referred to as "student devices" or "student meters." Student meters routinely communicate with and are organized by a "coach device." A coach device refers to a device that receives measurements from student meters and determines a bellwether meter from the student meters. A coach device can be a collector (border router), a meter, or another device with the ability to compute and communicate with student meters. A given device can be a coach for multiple electrical groups.

Based on the reported measurements, the coach device makes a determination of which of the meters is determined to be the bellwether meter, at least for a period of time. The determination is performed by comparing and analyzing the measurements from the meters among to the electrical group. When selected as a bellwether meter, a meter reports measurements, back to the coach device or to a central system, on a more frequent basis than other meters in the electrical group report their respective measurements. For example, meters in the electrical group may communicate measurements to the coach device every four hours, whereas the designated bellwether meter communicates measurements on an hourly basis.

The coach device can report the measurements from the bellwether meter back to a central system such as a head end system (HES) or a command center. The measurements from the bellwether meter are typically transmitted from the coach device to the central system on a more frequent basis than other measurements. Further, independent of any bellwether meter activities, any meter may communicate measurements to other systems or devices such as a collector or head end system at a different and/or unrelated rate (e.g., every day). In some cases, meters (including the bellwether meter) may transmit measurements directly upstream, bypassing the coach device.

Advantages of using dynamic bellwether metering include improved power distribution systems that can more quickly identify distribution system issues such as overvoltages or under-voltages and adjust parameters of the distribution network to address these issues. As discussed herein, a meter is typically an electrical meter that measures voltage. Hence, a measured voltage can be used to determine a bellwether meter, but other parameters such as current or phase can be measured and used to determine a bellwether meter instead or in addition to voltage.

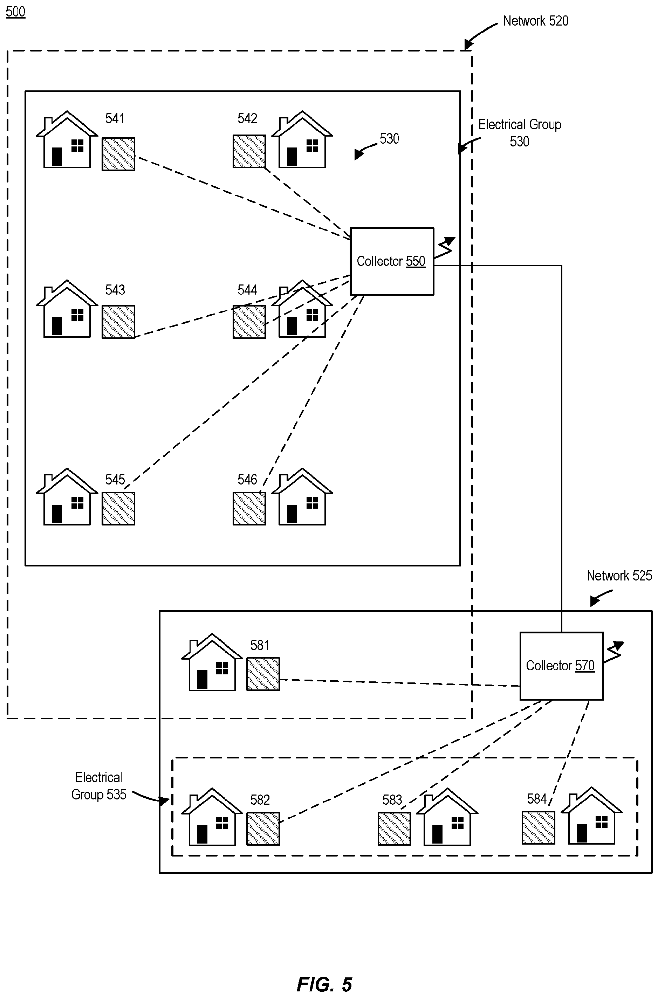

Each meter within an electrical group can be joined to a personal area network (PAN) of devices. A personal area network is a hierarchical path within a mesh communications network. In some cases, a given PAN can include multiple electrical groups. In other cases, an electrical group can include devices from more than one PAN (e.g., as discussed with respect to Figure 5).

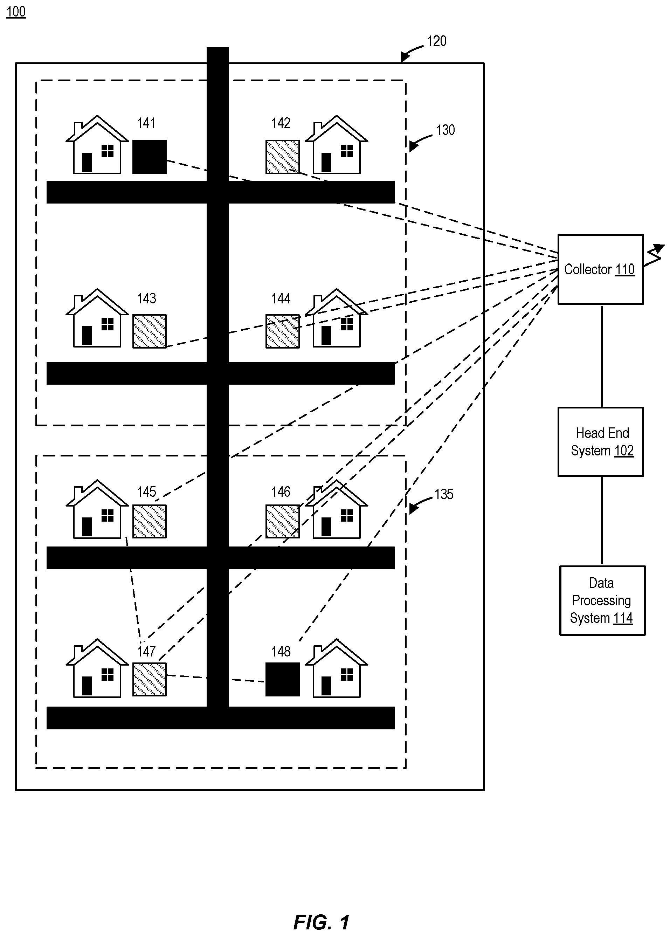

Turning now to the Figures, Figure 1 depicts an example of a communications network topology that corresponds to a portion of a power distribution system, according to an aspect of the present disclosure. Figure 1 depicts communications network 100, which includes head end system 102, collector 110, data processing system 114, and network 120. The example depicted includes two electrical groups 130 and 135, both of which include meters that communicate within network 120.

Network 120 can be a personal area network (PAN). A PAN may be a wireless network or a wireless mesh network that uses a wireless protocol, such as the WiFi, Bluetooth, Wireless Smart Utility Network (Wi-SUN), ZigBee, and Institute of Electrical and Electronics Engineers (IEEE) 802.15 protocols or a proprietary protocol. Collector 110 communicates with network 120. If network 120 is a PAN, then collector 110 can be a PAN coordinator for network 120. For example, collector 110 receives metering data and/or other measurements from meters 141-148 and passes data to head end system 102 for billing and/or analysis purposes. As depicted, network 120 has one collector, collector 110. But a given PAN can have multiple collectors under a single PAN coordinator. Additionally, additional meters can be added to network 120 and/or meters can be removed from network 120, as appropriate.

Meters 141-148 can be any kind of metering device such as an electric meter, e.g., an Advanced Metering Infrastructure (AMI) meter, or a standalone device. Each of meters 141-148 is located at and provides a resource to a respective end user premises. Meters 141-148 are configured to measure parameters such as voltage, current, phase, consumption, or temperature at an end user premises. Meters 141-148 can obtain consumption data, or metering data, on a periodic basis, independent from any reporting of measurements used for bellwether purposes.

Each meter 141-148 can communicate wirelessly with one or more other devices across one or more networks. While network 120 includes eight meters for illustration purposes, any number of meters is possible. For instance, network 120 can include hundreds of meters. Given a mesh topology, there can exist one or more different communication paths between meters 141-148 and collector 110. Collector 110 is connected to head end system 102 via a network. Collector 110 can perform functions such as aggregating measurements and/or metering data from meters 141-148 and providing those measurements to head end system 102.

Potential coach devices include collectors and meters. In the example depicted, in addition to collector functionality, collector 110 is also a coach device that is responsible for electrical group 130. For example, collector 110 has designated meter 141 as the bellwether device for electrical group 130. By contrast, meter 147 is acting as a coach device for electrical group 135. Meter 147 has designated meter 148 as the bellwether device for electrical group 135. The electrical groups 130 and 135 and the meters in the groups can change over time. For instance, a number of meters within an electrical group can change if one or more meters are re-allocated to other electrical groups.

As depicted, bellwether monitoring functions are divided between head end system 102 and data processing system 114. Data processing system 114 can be an advanced distribution management system (ADMS). Data processing system 114 integrates with the head end system 102 to receive and analyze measured data. For example, head end system 102 includes one or more computing devices 104 to perform processing functions such as aggregating metering and/or measurement data, processing metering data, communicating with collector 110 (or other collectors), communicating with meters 141-148, and sending alerts. Data processing system 114 processes the measurement data received from the meters. But in another aspect, the functionalities of head end system 102 and data processing system 114 can be consolidated.

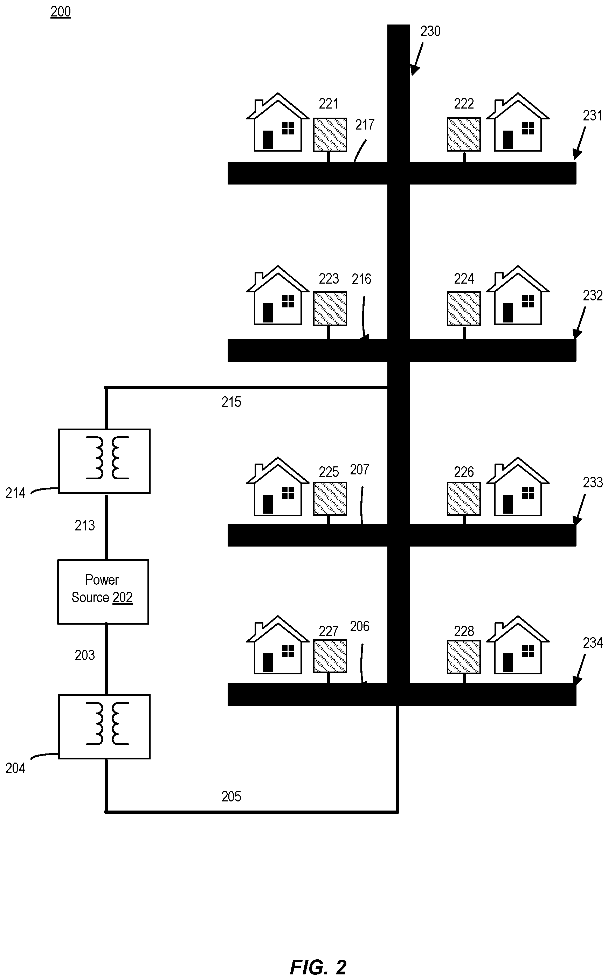

As explained, Figure 1 is a communications network. By contrast, Figure 2 depicts a resource (e.g., power) distribution topology. The communications network and the power distribution topology are separate. For instance, two or more meters may cluster into a personal area network based on wireless delay, path length, etc., whether or not the meters are fed by the same power distribution line. Accordingly, two meters in a communications network may be on different power distribution topologies or networks and hence be considered in different electrical groups, as they are electrically unrelated.

Figure 2 depicts an example of a distribution topology of a power distribution system, according to an aspect of the present disclosure. Figure 2 depicts power distribution system 200, which includes power source 202, feeders 203 and 213, distribution transformers 204 and 214, distribution lines 205-207 and 215-217, and meters 221-228.

In the example depicted, power source 202 provides one or more phases of electric power to feeders 203 and 213. In turn, feeder 203 provides power to distribution transformer 204 and feeder 213 provides power to distribution transformer 214. Distribution transformer 204 provides the one or more phases to distribution lines 205, which in turn feeds distribution lines 206 and 207. Distribution line 206 connects to meters 227 and 228. Distribution line 207 connects to meters 225 and 226. Distribution transformer 214 provides the one or more phases to distribution lines 215, which in turn feeds distribution lines 216 and 217. Distribution line 217 connects to meters 221 and 222. Distribution line 216 connects to meters 223 and 224.

For illustrative purposes, meters 221-228 are located on one of roads 230-234. In some cases, transmission lines and/or distribution transformers can follow topology of the roads. For example, a distribution transformer may follow a road and serve all the end user premises on the road. In this case, meters corresponding to these residences may form an electrical group. But any type of road topology is possible.

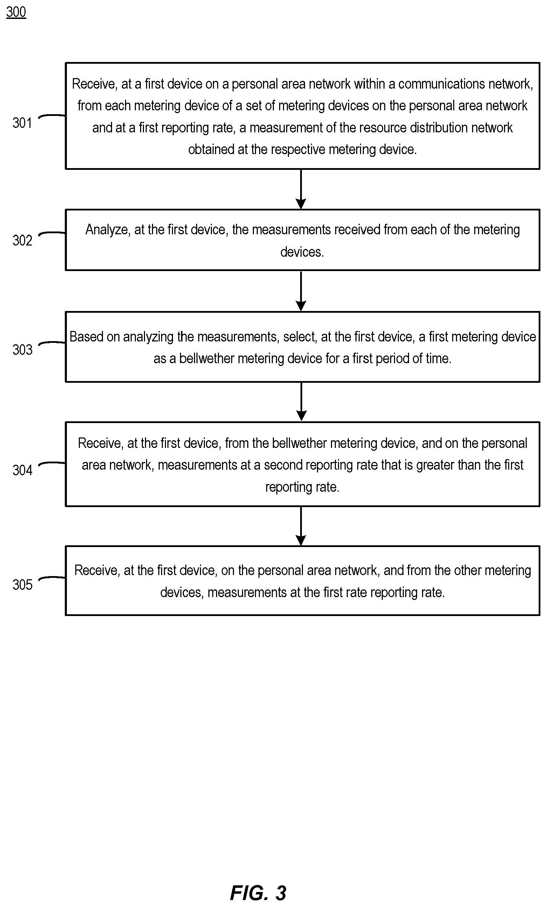

Figure 3 is a flowchart of an exemplary process 300 of identifying a bellwether meter, according to an aspect of the present disclosure. Process 300 includes blocks 301-305. One or more of blocks of process 300 may be skipped and/or duplicated. Additionally or alternatively process 300 may be repeated, for example, as a designation of bellwether meter is updated. Process 300 can be implemented by a coach device such as a designated meter on a personal area network of meters. In some cases, a coach device can be a collector. For example purposes, process 300 is discussed with respect to Figure 1.

At block 301, process 300 involves receiving, at a first device on a personal area network within a communications network, from each metering device of a set of metering devices on the personal area network and at a first reporting rate, a measurement of the resource distribution network obtained at the respective meter. The first device, e.g., coach device, and the set of metering devices are within a predefined group of devices, or an electrical group. Measurements can include voltage, current, phase, and so forth, and/or values based on or derived from measurements such as an average, minimum, or maximum voltage over a period of time.

For example, as depicted in Figure 1, electrical group 130 includes meters 141-144. A coach device, in this example, collector 110, receives, from each of meters 141-144 a respective measurement. As the coach device is designated to be collector 110, each of meters 141-144 is a student meter and therefore transmits the respective measurements to the coach device at a first, or default reporting rate. Electrical group 135 includes meters 145-148. Coach meter 147 receives measurements from student meters 145-148 at the default rate.

At block 302, process 300 involves analyzing, at the first device, the measurements received from each of the metering devices. Approaches to determining the meter associated with a measurement identified for monitoring include, but are not limited to, identifying a meter having a minimum voltage of the group, identifying a meter having a peak voltage of the group, identifying a meter having an average voltage closest to the average voltage of the group, identifying a meter having a lowest volatility of the instantaneous voltage measurements over a period of time, or other statistical metrics.

In one example, a measurement identified for monitoring includes identifying a lowest acceptable operating value within an operating range. For example if an operating range is 115 to 130 Volts, and the student meters measure voltages of 117 Volts, 121 Volts, 125 Volts, and 114 Volts, then the coach device identifies the meter that obtained the 117 Volt measurement as having the lowest voltage within the operating range. In another example, the highest acceptable voltage within the range is used.

In another example, a bellwether meter is selected based on a particular meter having a smallest difference between a measured value an average value as compared to other meters. For instance, the coach device computes an average value of all of the measurements and, for each meter, a corresponding difference between that meter's measured value and the average. Then, the coach device selects the meter having the smallest difference from the average as the bellwether meter.

In another example, a measurement of volatility is used to select the bellwether meter. In this case, the coach meter determines, for each meter, a measurement of volatility that represents an amount of change of the measured value over a period of time. Then, either the meter having the lowest or highest volatility is selected as the bellwether meter.

In yet another example, a bellwether meter is selected based on a particular meter having the lowest measurement relative to measurements from the other student meters. Continuing the example, if meters 141-144 have voltage measurements of 112, 114, 116, and 115 respectively, then collector 110 identifies meter 141 as the bellwether meter.

At block 303, process 300 involves, based on analyzing the measurements, selecting, at the first device, a first metering device as a bellwether meter for a first period of time. Continuing the example, collector 110 identifies, based on the criteria discussed with respect to block 302, meters 141 as the bellwether meter of electrical group 130. If some cases, collector 110 transmits a command to meter 141 that causes meter 141 to act as a bellwether meter of electrical group 130 and/or transmits a command to the meter designated as the previous bellwether meter, e.g., one of meters 142-144 to cease transmitting at the second, or bellwether reporting rate.

At block 304, process 300 involves receiving, at the first device, from the bellwether metering device, and on the personal area network, measurements at a second reporting rate that is greater than the first reporting rate. In some cases, the first device, e.g., the coach meter, receives the measurements from the bellwether meter and forwards the measurements upstream to a central system. But in other cases, depending on the configuration of the communications network, measurements from the bellwether meter are sent directly to a central system.

At block 305, process 300 involves receiving, at the first device, on the personal area network, and from the other metering devices, measurements at the first, or default, rate reporting rate. In some cases, the other devices, e.g., the coach meter, receives the measurements from the bellwether meter and forwards the measurements upstream to a central system. But in other cases, depending on the configuration of the communications network, measurements from the bellwether meter are sent directly to a central system.

A coach device can report measurements from the bellwether meter upstream to a central system on a more frequent basis than the measurements from other, non-bellwether meters. This upstream reporting rate can be the same as or differ from the reporting rates discussed above from the meters to the coach device.

After the bellwether meter is identified as meter 141, collector 110, head end system 102, and/or data processing system 114 can monitor measurements received from the bellwether meter. The measurements can indicate issues with the distribution network. Based on the identified issues, action can be taken. For example, a determination can be made that measurements from the bellwether meter are below a voltage threshold, indicating an issue. Examples of voltage thresholds for residential service are 115 Volts when the nominal voltage is 110 Volts or 210 Volts when the nominal voltage is 220 Volts. In response to determining that the additional voltage measurements are below a voltage threshold, the head end system 102 adjusts a resource regulation device (e.g., a voltage regulator or a capacitor bank) located on the power distribution network to bring the voltage back within normal levels.

The designation of bellwether meter can be dynamic. Accordingly, process 300 may re-executed periodically. For example, collector 110 can periodically execute block 302, then at a time interval, collector 110 can analyze data received at block 302 and execute block 303, possibly updating the bellwether meter designation to a different meter. For example, process 300 is executed a first time and a first meter is designated a bellwether meter. Then, process 300 is executed a second time, and the first meter is reconfigured as a non-bellwether meter (i.e., the first meter returns to reporting measurements at the default rate), and a second meter is configured as a bellwether meter, and so forth.

Meters may be initially designated as student devices or coach devices. For example, meters can be all designated as student meters with a single meter designated a coach device. By default student devices may be configured to transmit at a default reporting rate. Designation of meters as student devices can be based on physical topology data stored in a central system, such as head end system 102, and/or information about the communications network topology (e.g., the PAN). For instance, topology data can be used to form an initial determination of an electrical group. The meters in the group are designated students and a collector is designated a coach device.

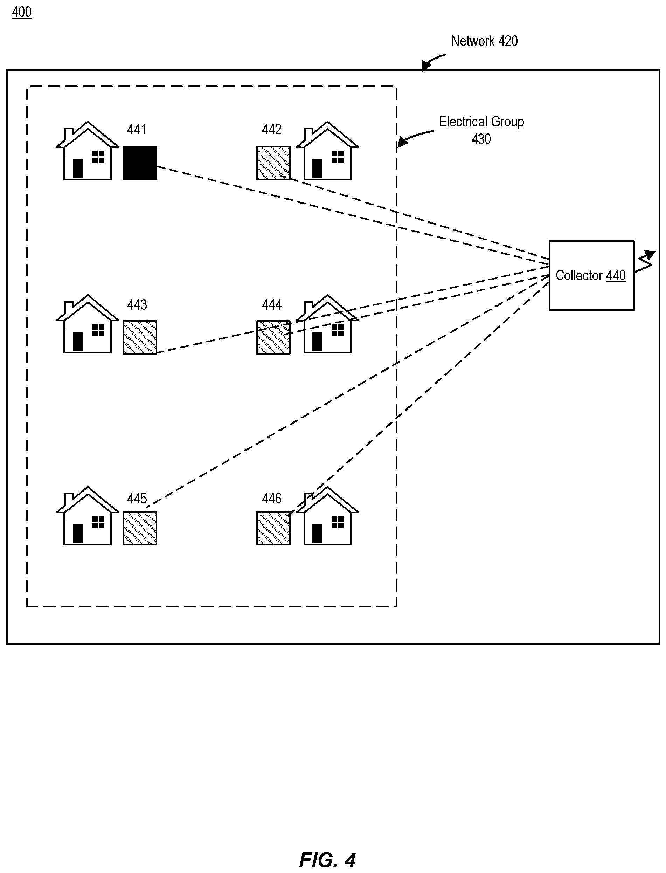

Figure 4 depicts an example of a communications network topology for a portion of a power distribution system in which the meters in the electrical group correspond to a single network, according to an aspect of the present disclosure. Relative to Figure 2, which shows a resource distribution topology, Figure 4 depicts communications network topology 400, which includes network 420. Network 420 can be a PAN. In turn, network 420 includes collector 440 and meters 441-446. Collector 440 is connected to a communications network that is connected to a head end system.

With respect to meters, network 420 is identical to electrical group 430. Therefore, as depicted, the electrical group includes meters 441-446 and no other meters (in contrast, Figure 5 depicts different meters on a personal area network being part of different electrical groups).

In an example, a change in network topology can cause one or more meters to be added or removed from an electrical group. Additionally, in some cases, a re-identification of a bellwether meter is performed. For example, a device such as the head end system, collector, or coach device, detects a change in topology on the resource distribution network. Based on the change in topology, the head end system informs the coach device that a new device has been added to the group and informs the new device of the designated coach.

Figure 5 depicts an example of a communications network topology for a portion of a power distribution system in which the meters in the electrical group are joined to two separate networks, according to an aspect of the present disclosure. Figure 5 depicts communications network topology 500, which includes collectors 550 and 570 and meters 541-546 and 581-584. Meters 541-546 and collector 550 form network 520. Network 520 is a communication network or a PAN. Meters 581-584 and collector 570 form network 525. Network 525 is a communication network or a PAN. Collectors 550 and 570 are connected to one or more communications networks that are connected to a head end system.

Electrical group 530, with collector 550 as coach, includes all of the meters of network 520, i.e., meters 541-546, and one of the meters, meter 581, from network 525. Meter 581 can communicate with collector 550. Electrical group 535, with collector 570 as coach, includes some but not all meters from network 525, specifically meters 582-584, and no meters from network 520. Hence, network 520 includes one entire electrical group 535 and part of another electrical group, electrical group 530.

### Exemplary Computing Device

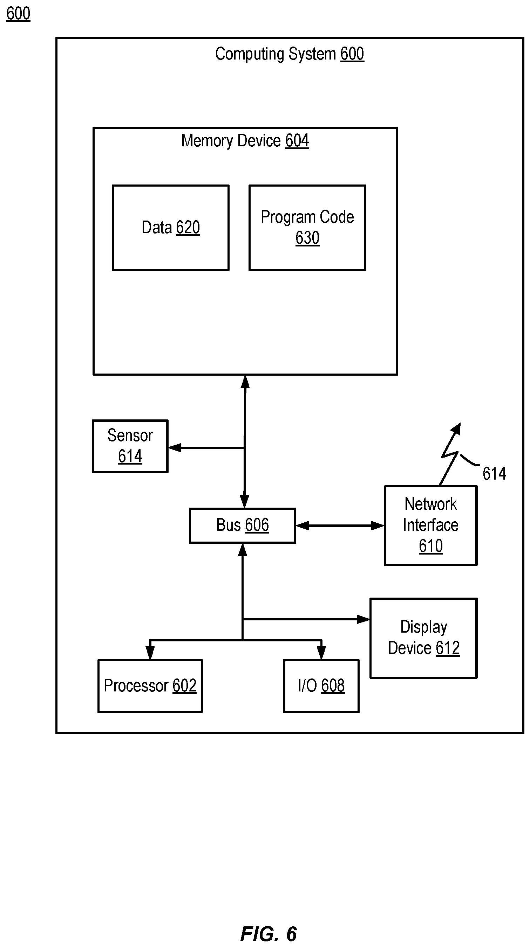

Figure 6 illustrates an example of a computing device, according to certain aspects of the present disclosure. Any suitable computing system may be used for performing the operations described herein. The depicted example of a computing device 600 includes a processor 602 communicatively coupled to one or more memory devices 604. Computing device 600 can be used in a meter, collector, or any other device described herein. The processor 602 executes computer-executable program code 630 stored in a memory device 604, accesses data 620 stored in the memory device 604, or both. Examples of the processor 602 include a microprocessor, an application-specific integrated circuit ("ASIC"), a field-programmable gate array ("FPGA"), or any other suitable processing device. The processor 602 can include any number of processing devices or cores, including a single processing device. The functionality of the computing device may be implemented in hardware, software, firmware, or a combination thereof.

The memory device 604 includes any suitable non-transitory computer-readable medium for storing data, program code, or both. A computer-readable medium can include any electronic, optical, magnetic, or other storage device capable of providing a processor with computer-readable instructions or other program code. Non-limiting examples of a computer-readable medium include a flash memory, a ROM, a RAM, an ASIC, or any other medium from which a processing device can read instructions. The instructions may include processor-specific instructions generated by a compiler or an interpreter from code written in any suitable computer-programming language, including, for example, C, C++, C#, Visual Basic, Java, or scripting language.

The computing device 600 may also include a number of external or internal devices, such as input or output devices. For example, the computing device 600 is shown with one or more input/output ("I/O") interfaces 608. An I/O interface 608 can receive input from input devices or provide output to output devices. One or more busses 606 are also included in the computing device 600. The bus 606 communicatively couples one or more components of a respective one of the computing device 600.

The computing device 600 executes program code 630 that configures the processor 602 to perform one or more of the operations described herein. For example, the program code 630 can cause the processor to perform the operations described in Figure 3.

The computing device 600 also includes a network interface device 610. The network interface device 610 includes any device or group of devices suitable for establishing a wired or wireless data connection to one or more data networks. The network interface device 610 may be a wireless device and have an antenna 614. The computing device 600 can communicate with one or more other computing devices implementing the computing device or other functionality via a data network using the network interface device 610.

The computing device 600 can also include a display device 612. Display device 612 can be a LCD, LED, touch-screen or other device operable to display information about the computing device 600. For example, information could include an operational status of the computing device, network status, etc.

The computing device 600 can also include sensor 614. Sensor 614 is configurable to obtain measurements such as voltage, current, phase, load, or temperature.

While the present subject matter has been described in detail with respect to specific aspects thereof, it will be appreciated that those skilled in the art, upon attaining an understanding of the foregoing, may readily produce alterations to, variations of, and equivalents to such aspects. Accordingly, it should be understood that the present disclosure has been presented for purposes of example rather than limitation and does not preclude inclusion of such modifications, variations, and/or additions to the present subject matter as would be readily apparent to one of ordinary skill in the art.

## Claims

1. A computer-implemented method for identifying a bellwether metering device in a resource distribution network, the method comprising:
receiving, at a first device on a personal area network (120) within a communications network, from each of a plurality of metering devices (141-148; 221-228) on the personal area network (120) and at a first reporting rate, a measurement of the resource distribution network obtained at the respective metering device, wherein the first device and the plurality of metering devices (141-148; 221-228) are within a predefined group of devices (130, 136);
analyzing, at the first device, the measurements received from each of the plurality of metering devices (141-148; 221-228);
based on the analyzing, selecting, at the first device, a first metering device of the plurality of metering devices (141-148; 221-228) as a bellwether metering device for a first period of time;
receiving, at the first device, from the bellwether metering device, and on the personal area network (120), first measurements at a second reporting rate that is greater than the first reporting rate; and
receiving, at the first device, on the personal area network (120), and from other devices of the plurality of metering devices (141-148; 221-228), second measurements at the first reporting rate.

2. The method of claim 1, wherein the selecting comprises sending a first signal to the first metering device to instruct the first metering device to transmit the first measurements at the second reporting rate and sending a second signal to at least one of the other devices to instruct the at least one other device to send the second measurements at the first reporting rate.

3. The method of claim 1, wherein the first device is a member of an additional predefined group of devices (130, 136), wherein the additional predefined group of devices (130, 136) comprises at least one device that is not a member of the predefined group of devices (130, 136).

4. The method of claim 1, further comprising reporting, at the first device, the first measurements and the second measurements to a central system.

5. The method of claim 1, wherein the first device is a collector (110) or a coordinator for the personal area network (120), the method further comprising receiving, at a central system outside of the personal area network (120) and from one or more of the plurality of metering devices (141-148; 221-228), measurements at a third reporting rate.

6. The method of claim 1, further comprising:
analyzing, at the first device, the first measurements received and the second measurements; and
based on analyzing the first measurements and the second measurements, selecting, at the first device and for a second period of time, a second metering device of the plurality of metering devices (141-148; 221-228) as the bellwether metering device.

7. The method of claim 1, wherein a first metering device of the plurality of metering devices (141-148; 221-228) is connected to a first resource distribution line and a second metering device of the plurality of metering devices (141-148; 221-228) is connected to a second resource distribution line that is connected upstream to the first resource distribution line.

8. The method of claim 1, wherein analyzing the measurements comprises at least one of:
determining that the first metering device is associated with a measurement value that is either (i) lower than or (ii) higher than the measurement values associated with the other metering devices of the plurality of metering devices (141-148; 221-228); and/or
determining, from the measurements associated with each of the plurality of metering devices (141-148; 221-228), an average measurement; and calculating, for the measurements associated with each of the plurality of metering devices (141-148; 221-228), a corresponding difference between the measurements and the average measurement, wherein the selecting comprises identifying that the first metering device is associated with a difference that is a smallest of all of the differences; and/or
obtaining, from the plurality of metering devices (141-148; 221-228), an additional set of measurements; and determining, from each of the additional set of measurements, and for each of the plurality of metering devices (141-148; 221-228), a respective measurement of volatility, and wherein the selecting comprises identifying that the first metering device is associated with a lowest measure of volatility of the measurements of volatility.

9. The method of claim 1, wherein the measurements comprise one or more of voltage, current, and phase.

10. The method of claim 1, further comprising:
receiving, at a central system, additional measurements from the bellwether metering device;
determining that the additional measurements are below a threshold; and
in response to determining that the additional measurements are below a threshold, adjusting a regulation device that is connected upstream from the bellwether metering device.

11. The method of claim 1, wherein the plurality of metering devices (141-148; 221-228) form an electrical group (130, 135), further comprising:
detecting a change in topology on the resource distribution network; and
based on the change in topology, performing one or more of: (i) adding an additional metering device to the electrical group or (ii) removing one of the plurality of metering devices (141-148; 221-228) from the electrical group.

12. A device comprising:
a communications device configurable to connect to a personal area network (120);
a non-transitory computer-readable medium storing computer-executable program instructions; and
a processing device communicatively coupled to the non-transitory computer-readable medium for executing the computer-executable program instructions, wherein executing the computer-executable program instructions configures the processing device to perform operations comprising:
receiving, via the communications device and from each of a plurality of metering devices (141-148; 221-228) on the personal area network (120) and at a first reporting rate, a measurement of a resource distribution network obtained at the respective metering device, wherein the device and the plurality of metering devices (141-148; 221-228) are within a predefined group of devices (130, 136);
analyzing the measurements received from each of the plurality of metering devices (141-148; 221-228); based on the analyzing, selecting a first metering device of the plurality of metering devices (141-148; 221-228) as a bellwether metering device for a first period of time;
receiving, via the communications device and from the bellwether metering device, and on the personal area network (120), first measurements at a second reporting rate that is greater than the first reporting rate; and receiving, via the communications device and from other devices of the plurality of metering devices (141-148; 221-228), second measurements at the first reporting rate.

13. The device of claim 12, wherein:
the selecting comprises sending a first signal to the first metering device to instruct the first metering device to transmit the first measurements at the second reporting rate and sending a second signal to at least one of the other devices to instruct the at least one other device to send the second measurements at the first reporting rate, and/or
executing the computer-executable program instructions configures the processing device to perform operations comprising: analyzing, at the first device, the first measurements received and the second measurements; and based on analyzing the first measurements and the second measurements, selecting, at the first device and for a second period of time, a second metering device of the plurality of metering devices (141-148; 221-228) as the bellwether metering device.

14. A computer-implemented method for identifying a bellwether metering device in a resource distribution network, the method comprising:
receiving, on a personal area network (120) within a communications network, from each of a plurality of metering devices (141-148; 221-228) on the personal area network (120) and at a first reporting rate, a measurement of the resource distribution network obtained at the respective metering device, wherein the plurality of metering devices (141-148; 221-228) are within a predefined group of devices (130, 136);
analyzing the measurements received from each of the plurality of metering devices (141-148; 221-228);
based on the analyzing, selecting a first metering device of the plurality of metering devices (141-148; 221-228) as a bellwether metering device for a first period of time;
receiving from the bellwether metering device, and on the personal area network (120), first measurements at a second reporting rate that is greater than the first reporting rate; and
receiving on the personal area network (120), and from other devices of the plurality of metering devices (141-148; 221-228), second measurements at the first reporting rate.

15. The method of claim 14, further comprising:
analyzing the first measurements received and the second measurements; and
based on analyzing the first measurements and the second measurements, selecting, at the first device and for a second period of time, a second metering device of the plurality of metering devices (141-148; 221-228) as the bellwether metering device,
and wherein the plurality of metering devices (141-148; 221-228) form an electrical group, the method further comprising: detecting a change in topology on the resource distribution network; and based on the change in topology, performing one or more of:
(i) adding an additional metering device to the electrical group or
(ii) removing one of the plurality of metering devices (141-148; 221-228) from the electrical group.

## Patentansprüche

1. Computerimplementiertes Verfahren zum Identifizieren einer Bellwether-Messvorrichtung in einem Ressourcenverteilungsnetzwerk, wobei das Verfahren Folgendes umfasst:
Empfangen, an einer ersten Vorrichtung in einem persönlichen Netzwerk (120) innerhalb eines Kommunikationsnetzwerks, von jeder einer Vielzahl von Messvorrichtungen (141-148; 221-228) in dem persönlichen Netzwerk (120) und mit einer ersten Melderate, eine Messung des Ressourcenverteilungsnetzes, die an der jeweiligen Messvorrichtung erzielt wird, wobei die erste Vorrichtung und die Vielzahl von Messvorrichtungen (141-148; 221-228) innerhalb einer vordefinierten Gruppe von Vorrichtungen (130, 136) sind;
Analysieren, an der ersten Vorrichtung, der von jeder der Vielzahl von Messvorrichtungen (141-148; 221-228) empfangenen Messungen;
basierend auf dem Analysieren, Auswählen, an der ersten Vorrichtung, einer ersten Messvorrichtung aus der Vielzahl von Messvorrichtungen (141-148; 221-228) als Bellwether-Messvorrichtung für einen ersten Zeitraum;
Empfangen, an der ersten Vorrichtung, von der Bellwether-Messvorrichtung und in dem persönlichen Netzwerk (120), von ersten Messungen mit einer zweiten Melderate, die größer ist als die erste Melderate; und
Empfangen, an der ersten Vorrichtung, in dem persönlichen Netzwerk (120) und von anderen Vorrichtungen der Vielzahl von Messvorrichtungen (141-148; 221-228), von zweiten Messungen mit der ersten Melderate.

2. Verfahren nach Anspruch 1, wobei das Auswählen das Senden eines ersten Signals an die erste Messvorrichtung umfasst, um die erste Messvorrichtung anzuweisen, die ersten Messungen mit der zweiten Melderate zu übertragen, und das Senden eines zweiten Signals an mindestens eine der anderen Vorrichtungen, um die mindestens eine andere Vorrichtung anzuweisen, die zweiten Messungen mit der ersten Melderate zu senden.

3. Verfahren nach Anspruch 1, wobei die erste Vorrichtung ein Element einer zusätzlichen vordefinierten Gruppe von Vorrichtungen (130, 136) ist, wobei die zusätzliche vordefinierte Gruppe von Vorrichtungen (130, 136) mindestens eine Vorrichtung umfasst, die kein Element der vordefinierten Gruppe von Vorrichtungen (130, 136) ist.

4. Verfahren nach Anspruch 1, ferner umfassend das Melden der ersten Messungen und der zweiten Messungen an ein zentrales System an der ersten Vorrichtung.

5. Verfahren nach Anspruch 1, wobei die erste Vorrichtung ein Kollektor (110) oder ein Koordinator für das persönliche Netzwerk (120) ist, wobei das Verfahren ferner das Empfangen von Messungen mit einer dritten Melderate an einem zentralen System außerhalb des persönlichen Netzwerks (120) und von einer oder mehreren der Vielzahl von Messvorrichtungen (141-148; 221-228) umfasst.

6. Verfahren nach Anspruch 1, ferner Folgendes umfassend:
Analysieren der ersten empfangenen Messungen und der zweiten Messungen an der ersten Vorrichtung; und
basierend auf dem Analysieren der ersten Messungen und der zweiten Messungen, Auswählen einer zweiten Messvorrichtung aus der Vielzahl von Messvorrichtungen (141-148; 221-228) als die Bellwether-Messvorrichtung an der ersten Vorrichtung und für einen zweiten Zeitraum.

7. Verfahren nach Anspruch 1, wobei eine erste Messvorrichtung aus der Vielzahl von Messvorrichtungen (141-148; 221-228) mit einer ersten Ressourcenverteilungsleitung verbunden ist und eine zweite Messvorrichtung aus der Vielzahl von Messvorrichtungen (141-148; 221-228) mit einer zweiten Ressourcenverteilungsleitung verbunden ist, die stromaufwärts mit der ersten Ressourcenverteilungsleitung verbunden ist.

8. Verfahren nach Anspruch 1, wobei die Analyse der Messungen Folgendes umfasst:
Bestimmen, dass die erste Messvorrichtung einem Messwert zugeordnet ist, der entweder (i) niedriger oder (ii) höher ist als die Messwerte, die den anderen Messvorrichtungen der Vielzahl von Messvorrichtungen (141-148; 221-228) zugeordnet sind; und/oder
Bestimmen eines Durchschnittswerts aus den Messungen, die jeder der Vielzahl von Messvorrichtungen (141-148; 221-228) zugeordnet sind; und Berechnen einer entsprechenden Differenz zwischen den Messungen und dem Durchschnittswert für die Messungen, die jeder der Vielzahl von Messvorrichtungen (141-148; 221-228) zugeordnet sind, wobei das Auswählen das Identifizieren umfasst, dass die erste Messvorrichtung einer Differenz zugeordnet ist, welche die kleinste aller Differenzen ist; und/oder
Erzielen eines zusätzlichen Satzes von Messungen von der Vielzahl von Messvorrichtungen (141-148; 221-228); und Bestimmen, aus jedem der zusätzlichen Sätze von Messungen und für jede der Vielzahl von Messvorrichtungen (141-148; 221-228), einer jeweiligen Messung der Flüchtigkeit, und wobei das Auswähle das Identifizieren umfasst, dass die erste Messvorrichtung einer niedrigsten Flüchtigkeitsmessung der Flüchtigkeitsmessungen zugeordnet ist.

9. Verfahren nach Anspruch 1, wobei die Messungen eines oder mehrere von Spannung, Strom und Phase umfassen.

10. Verfahren nach Anspruch 1, ferner Folgendes umfassend:
Empfangen zusätzlicher Messungen von der Bellwether-Messvorrichtung in einem zentralen System;
Bestimmen, dass die zusätzlichen Messungen unter einem Schwellenwert liegen; und
als Reaktion auf das Bestimmen, dass die zusätzlichen Messungen unter einem Schwellenwert liegen, Anpassen einer Regelvorrichtung, die stromaufwärts von der Bellwether-Messvorrichtung angeschlossen ist.

11. Verfahren nach Anspruch 1, wobei die Vielzahl von Messvorrichtungen (141-148; 221-228) eine elektrische Gruppe (130, 135) bildet, ferner Folgendes umfassend:
Erfassen einer Änderung der Topologie des Ressourcenverteilungsnetzwerks; und
basierend auf der Änderung der Topologie, Ausführen eines oder mehrerer der folgenden Schritte: (i) Hinzufügen einer zusätzlichen Messvorrichtung zu der elektrischen Gruppe oder (ii) Entfernen einer der Vielzahl von Messvorrichtungen (141-148; 221-228) aus der elektrischen Gruppe.

12. Vorrichtung, Folgendes umfassend:
eine Kommunikationsvorrichtung, die konfigurierbar ist, um sich mit einem persönlichen Netzwerk (120) zu verbinden;
ein nicht-transientes computerlesbares Medium, das computerausführbare Anweisungen speichert; und
eine Verarbeitungsvorrichtung, die kommunikativ mit dem nicht-transienten computerlesbaren Medium gekoppelt ist, um die computerausführbaren Anweisungen auszuführen, wobei das Ausführen der computerausführbaren Anweisungen die Verarbeitungsvorrichtung zum Ausführen von Schritten konfiguriert, die Folgendes umfassen:
Empfangen, über die Kommunikationsvorrichtung und von jeder einer Vielzahl von Messvorrichtungen (141-148; 221-228) in dem persönlichen Netzwerk (120) und mit einer ersten Melderate, einer Messung eines Ressourcenverteilungsnetzes, die an der jeweiligen Messvorrichtung erzielt wird, wobei die Vorrichtung und die Vielzahl von Messvorrichtungen (141-148; 221-228) innerhalb einer vordefinierten Gruppe von Vorrichtungen (130, 136) sind;
Analysieren der von jeder der Vielzahl von Messvorrichtungen (141-148; 221-228) empfangenen Messungen; basierend auf dem Analysieren, Auswählen einer ersten Messvorrichtung der Vielzahl von Messvorrichtungen (141-148; 221-228) als eine Bellwether-Messvorrichtung für einen ersten Zeitraum;
Empfangen von ersten Messungen mit einer zweiten Melderate, die größer ist als die erste Melderate, über die Kommunikationsvorrichtung und von der Bellwether-Messvorrichtung und in dem persönlichen Netzwerk (120); und Empfangen von zweiten Messungen mit der ersten Melderate über die Kommunikationsvorrichtung und von anderen Vorrichtungen der Vielzahl von Messvorrichtungen (141-148; 221-228).

13. Vorrichtung nach Anspruch 12, wobei:
das Auswählen das Senden eines ersten Signals an die erste Messvorrichtung umfasst, um die erste Messvorrichtung anzuweisen, die ersten Messungen mit der zweiten Melderate zu übertragen, und das Senden eines zweiten Signals an mindestens eine der anderen Vorrichtungen, um die mindestens eine andere Vorrichtung anzuweisen, die zweiten Messungen mit der ersten Melderate zu senden, und/oder
das Ausführen der Anweisungen des computerausführbaren Programms die Verarbeitungsvorrichtung konfiguriert, um Schritte durchzuführen, die Folgendes umfassen: Analysieren, an der ersten Vorrichtung, der ersten empfangenen Messungen und der zweiten Messungen; und basierend auf dem Analysieren der ersten Messungen und der zweiten Messungen, Auswählen, an der ersten Vorrichtung und für einen zweiten Zeitraum, einer zweiten Messvorrichtung aus der Vielzahl von Messvorrichtungen (141-148; 221-228) als die Bellwether-Messvorrichtung.

14. Computerimplementiertes Verfahren zum Identifizieren einer Bellwether-Messvorrichtung in einem Ressourcenverteilungsnetzwerk, wobei das Verfahren Folgendes umfasst:
Empfangen, in einem persönlichen Netzwerk (120) innerhalb eines Kommunikationsnetzwerks, von jeder einer Vielzahl von Messvorrichtungen (141-148; 221-228) in dem persönlichen Netzwerk (120) und mit einer ersten Melderate, einer Messung des Ressourcenverteilungsnetzes, die an der jeweiligen Messvorrichtung erzielt wird, wobei die Vielzahl von Messvorrichtungen (141-148; 221-228) innerhalb einer vordefinierten Gruppe von Vorrichtungen (130, 136) ist;
Analysieren der von jeder der Vielzahl von Messvorrichtungen (141-148; 221-228) empfangenen Messungen;
basierend auf dem Analysieren, Auswählen einer ersten Messvorrichtung aus der Vielzahl von Messvorrichtungen (141-148; 221-228) als Bellwether-Messvorrichtung für einen ersten Zeitraum;
Empfangen von der Bellwether-Messvorrichtung und in dem persönlichen Netzwerk (120), von ersten Messungen an der ersten Vorrichtung mit einer zweiten Melderate, die größer ist als die erste Melderate; und
Empfangen, in dem persönlichen Netzwerk (120) und von anderen Vorrichtungen der Vielzahl von Messvorrichtungen (141-148; 221-228), von zweiten Messungen mit der ersten Melderate.

15. Verfahren nach Anspruch 14, ferner Folgendes umfassend:
Analysieren der ersten empfangenen Messungen und der zweiten Messungen; und
basierend auf dem Analysieren der ersten Messungen und der zweiten Messungen, Auswählen einer zweiten Messvorrichtung aus der Vielzahl von Messvorrichtungen (141-148; 221-228) als die Bellwether-Messvorrichtung an der ersten Vorrichtung und für einen zweiten Zeitraum,
und wobei die Vielzahl von Messvorrichtungen (141-148; 221-228) eine elektrische Gruppe bildet, wobei das Verfahren ferner Folgendes umfasst: Erfassen einer Änderung der Topologie im Ressourcenverteilungsnetzwerk; und basierend auf der Änderung der Topologie, Ausführen eines oder mehrerer der folgenden Schritte:
(i) Hinzufügen einer zusätzlichen Messvorrichtung zur elektrischen Gruppe, oder
(ii) Entfernen einer der Vielzahl von Messvorrichtungen (141-148; 221-228) aus der elektrischen Gruppe.

## Revendications

1. Procédé mis en œuvre par ordinateur pour identifier un dispositif de mesure indicateur dans un réseau de distribution de ressources, le procédé comprenant les étapes suivantes :
réception, au niveau d'un premier dispositif sur un réseau personnel (120) au sein d'un réseau de communication, à partir de chacun d'une pluralité de dispositifs de mesure (141-148 ; 221-228) sur le réseau personnel (120), et à un premier débit de communication, d'une mesure du réseau de distribution de ressources obtenue au niveau du dispositif de mesure respectif, dans lequel le premier dispositif et la pluralité de dispositifs de mesure (141-148 ; 221-228) sont compris dans un groupe de dispositifs prédéfini (130, 136) ;
analyse, au niveau du premier dispositif, des mesures reçues de chacun de la pluralité de dispositifs de mesure (141-148 ; 221-228) ;
sur la base de l'analyse, sélection, au niveau du premier dispositif, d'un premier dispositif de mesure de la pluralité de dispositifs de mesure (141-148 ; 221-228) en tant que dispositif de mesure indicateur pour une première période de temps ;
réception, au niveau du premier dispositif, à partir du dispositif de mesure indicateur, et sur le réseau personnel (120), de premières mesures à un deuxième débit de communication qui est supérieur au premier débit de communication ; et
réception, au niveau du premier dispositif, sur le réseau personnel (120), et à partir d'autres dispositifs de la pluralité de dispositifs de mesure (141-148 ; 221-228), de deuxièmes mesures au premier débit de communication.

2. Procédé selon la revendication 1, dans lequel la sélection comprend l'envoi d'un premier signal au premier dispositif de mesure pour instruire le premier dispositif de mesure à transmettre les premières mesures au deuxième débit de communication et à envoyer un deuxième signal à au moins un des autres dispositifs pour instruire ledit au moins un autre dispositif à envoyer les deuxièmes mesures au premier débit de communication.

3. Procédé selon la revendication 1, dans lequel le premier dispositif est un élément d'un groupe prédéfini additionnel de dispositifs (130, 136), dans lequel le groupe prédéfini additionnel de dispositifs (130, 136) comprend au moins un dispositif qui n'est pas un membre du groupe prédéfini de dispositifs (130, 136).

4. Procédé selon la revendication 1, comprenant en outre l'étape de communication, au niveau du premier dispositif, des premières mesures et des deuxièmes mesures à un système central.

5. Procédé selon la revendication 1, dans lequel le premier dispositif est un collecteur (110) ou un coordinateur pour le réseau personnel (120), le procédé comprenant en outre l'étape de réception, au niveau d'un système central à l'extérieur du réseau personnel (120) et à partir d'un ou de plusieurs de la pluralité de dispositifs de mesure (141-148, ; 221-228), des mesures à un troisième débit de communication.

6. Procédé selon la revendication 1, comprenant en outre les étapes suivantes :
analyse, au niveau du premier dispositif, des premières mesures et des deuxièmes mesures reçues ; et
sur la base de l'analyse des premières mesures et des deuxièmes mesures, sélection, au niveau du premier dispositif, et pour une deuxième période de temps, d'un deuxième dispositif de mesure de la pluralité de dispositifs de mesure (141-148 ; 221-228) en tant que dispositif de mesure indicateur.

7. Procédé selon la revendication 1, dans lequel un premier dispositif de mesure de la pluralité de dispositifs de mesure (141-148, 221-228) est connecté à une première ligne de distribution de ressources et un deuxième dispositif de mesure de la pluralité de dispositifs de mesure (141-148 ; 221-228) est connecté à une deuxième ligne de distribution de ressources qui est connectée en amont de la première ligne de distribution de ressources.

8. Procédé selon la revendication 1, dans lequel l'analyse des mesures comprend au moins une des étapes suivantes :
détermination que le premier dispositif de mesure est associé à une valeur de mesure qui est soit (i) inférieure ou (ii) supérieure aux valeurs de mesure associées aux autres dispositifs de mesure de la pluralité de dispositifs de mesure (141-148 ; 221-228) ; et/ou
détermination, à partir des mesures associées à chacun de la pluralité de dispositifs de mesure (141-148 ; 221-228), d'une mesure moyenne, et calcul, pour les mesures associées à chacun de la pluralité de dispositifs de mesure (141-148 ; 221-228), d'une différence correspondante entre les mesures et la mesure moyenne, dans lequel la sélection comprend l'identification du fait que le premier dispositif de mesure est associé à une différence qui est la différence la plus petite de toutes les différences ; et/ou
obtention, à partir de la pluralité de dispositifs de mesure (141-148 ; 221-228), d'un ensemble additionnel de mesures et détermination, à partir de chacun de l'ensemble additionnel de mesures, et pour chacun de la pluralité de dispositifs de mesure (141-148 ; 221-228), d'une mesure de volatilité respective, et dans lequel la sélection comprend l'identification du fait que le premier dispositif de mesure est associé à la mesure de volatilité la plus basse des mesures de volatilité.

9. Procédé selon la revendication 1, dans lequel les mesures comprennent une ou plusieurs des valeurs suivantes : tension, courant et phase.

10. Procédé selon la revendication 1, comprenant en outre les étapes suivantes :
réception, au niveau d'un système central, de mesures additionnelles à partir du dispositif de mesure indicateur ;
détermination que les mesures additionnelles sont inférieures à un seuil ; et
en réponse à la détermination du fait que les mesures additionnelles sont inférieures à un seuil, ajustement d'un dispositif de régulation qui est connecté en amont du dispositif de mesure indicateur.

11. Procédé selon la revendication 1, dans lequel la pluralité de dispositifs de mesure (141-148 ; 221-228) forme un groupe électrique (130, 135), comprenant en outre les étapes suivantes :
détection d'un changement dans la topologie sur le réseau de distribution de ressources ; et
sur la base du changement de topologie, exécution d'une ou des plusieurs étapes suivantes : (i) ajout d'un dispositif de mesure additionnel au groupe électrique, ou (ii) retrait de l'un de la pluralité de dispositifs de mesure (141-148 ; 221-228) du groupe électrique.

12. Dispositif, comprenant :
un dispositif de communication pouvant être configuré pour être connecté à un réseau personnel (120) ;
un support non transitoire lisible par ordinateur stockant des instructions de programme exécutable par ordinateur ; et
un dispositif de traitement couplé de manière communicative au support non transitoire lisible par ordinateur pour exécuter les instructions du programme exécutable par ordinateur, l'exécution des instructions de programme exécutable par ordinateur configurant le dispositif de traitement pour effectuer les opérations suivantes :
réception, via le dispositif de communication et à partir de chacun d'une pluralité de dispositifs de mesure (141-148 ; 221-228) sur le réseau personnel 5120) et à un premier débit de communication, d'une mesure d'un réseau de distribution de ressources obtenue au niveau du dispositif de mesure respectif, dans lequel le dispositif et la pluralité de dispositifs de mesure (141-148 ; 221-228) sont compris dans le cadre d'un groupe de dispositifs prédéfini (130, 136) ;
analyse des mesures reçues de chacun de la pluralité de dispositifs de mesure (141-148 ; 221-228) ; sur la base de l'analyse, sélection d'un premier dispositif de mesure de la pluralité de dispositifs de mesure (141-148 ; 221-228) en tant que dispositif de mesure indicateur pour une première période de temps ;
réception, via le dispositif de communication, et à partir du dispositif de mesure indicateur, et sur le réseau personnel (120), de premières mesures à un deuxième débit de communication qui est supérieur au premier débit de communication ; et réception, via le dispositif de communication, et à partir d'autres dispositifs de la pluralité de dispositifs de mesure (141-148 ; 221-228), de deuxièmes mesures au premier débit de communication.

13. Dispositif selon la revendication 12, dans lequel :
la sélection comprend l'envoi d'un premier signal au premier dispositif de mesure pour instruire le premier dispositif de mesure à transmettre les premières mesures au deuxième débit de communication et à envoyer un deuxième signal à au moins l'un des autres dispositifs pour instruire ledit au moins un autre dispositif à envoyer les deuxièmes mesures au premier débit de communication ; et/ou
l'exécution des instructions du programme exécutable par ordinateur configure le dispositif de traitement pour exécuter les opérations suivantes : analyse, au niveau du premier dispositif, des premières mesures et des deuxièmes mesures reçues ; et, sur la base de l'analyse des premières mesures et des deuxièmes mesures, sélection, au niveau du premier dispositif, et pour une deuxième période de temps, d'un deuxième dispositif de mesure de la pluralité de dispositifs de mesure (141-148 ; 221-228) en tant que dispositif de mesure indicateur.

14. Procédé mis en œuvre par ordinateur pour identifier un dispositif de mesure indicateur dans un réseau de distribution de ressources, le procédé comprenant les étapes suivantes :
réception, sur un réseau personnel (120) au sein d'un réseau de communication, à partir de chacun d'une pluralité de dispositifs de mesure (141-148 ; 221-228) sur le réseau personnel (120), et à un premier débit de communication, d'une mesure du réseau de distribution de ressources obtenue au niveau du dispositif de mesure respectif, dans lequel la pluralité de dispositifs de mesure (141-148 ; 221-228) sont compris dans le cadre d'un groupe prédéfini de dispositifs (130, 136) ;
analyse des mesures reçues de chacun de la pluralité de dispositifs de mesure (141-148 ; 221-228) ;
sur la base de l'analyse, sélection d'un premier dispositif de mesure de la pluralité de dispositifs de mesure (141-148 ; 221-228) en tant que dispositif de mesure indicateur pour une première période de temps ;
réception, à partir du dispositif de mesure indicateur, et sur le réseau personnel (120), de premières mesures à un deuxième débit de communication qui est supérieur au premier débit de communication ; et
réception sur le réseau personnel (120), et à partir d'autres dispositifs de la pluralité de dispositifs de mesure (141-148 ; 221-228), de deuxièmes mesures au premier débit de communication.

15. Procédé selon la revendication 14, comprenant en outre les étapes suivantes :
analyse des premières mesures et des deuxièmes mesures reçues ; et
sur la base de l'analyse des premières mesures et des deuxièmes mesures, sélection, au niveau du premier dispositif et pour une deuxième période de temps, d'un deuxième dispositif de mesure de la pluralité de dispositifs de mesure (141-148 ; 221-228) en tant que dispositif de mesure indicateur ;
et dans lequel la pluralité de dispositifs de mesure (141-148 ; 221-228) forme un groupe électrique, le procédé comprenant en outre l'étape de détection d'un changement dans la topologie sur le réseau de distribution de ressources, et sur la base du changement de topologie, exécution d'une ou de plusieurs des étapes suivantes :
(i) ajout d'un dispositif de mesure additionnel au groupe électrique ; ou
(ii) retrait de l'un de la pluralité de dispositifs de mesure (141-148 ; 221-228) du groupe électrique.
